# EUROPÄISCHE PATENTSCHRIFT

(11) **EP 2 849 925 B1**
(45) Veröffentlichungstag und Bekanntmachung des Hinweises auf die Patenterteilung: **06.03.2019**
(21) Anmeldenummer: 12746307.3
(22) Anmeldetag: 31.07.2012
(51) Int. Cl.: B29C 45/00, B29C 45/14, B29C 45/16, B29K 77/00, B29K 55/02

(54) **VERBUND-BAUTEIL AUS KUNSTSTOFF**
PRODUCT MADE OF COMPOSITE
PRODUIT EN MATERIAU INTEGRE

(30) Priorität: 14.05.2012 DE 102012104187
(43) Veröffentlichungstag der Anmeldung: 25.03.2015
(73) Patentinhaber: Automobile Patentverwaltungs- und Verwertungs- gesellschaft mbH, 58511 Lüdenscheid (DE)
(72) Erfinder: KIESLICH, Dirk, 58840 Plettenberg (DE); HU, Binfeng, 58509 Lüdenscheid (DE)
(74) Vertreter: Patentanwälte Dörner & Kötter PartG mbB
(86) Internationale Anmeldenummer: PCT/EP2012/064922
(87) Internationale Veröffentlichungsnummer: WO 2013/170912

(56) Entgegenhaltungen:
- EP-A1- 1 686 147
- EP-A1- 2 327 544
- EP-A2- 0 485 838
- EP-A2- 0 485 838
- EP-A2- 2 053 484
- WO-A2-2006/114429
- CN-A- 102 127 764
- DE-A1- 19 516 540
- DE-A1-102007 009 583
- DE-A1-102009 006 363
- DE-A1-102010 016 973
- DE-U1-202008 008 877
- JP-B2- 3 112 147
- US-A1- 2006 138 699
- US-A1- 2006 225 605
- US-A1- 2007 190 310
- US-A1- 2007 190 310
- Anonymous: "Plasmaaktivierung - Oberflächenaktivierung & Oberflächenmodifizierung | Plasmatreat GmbH", , 11 December 2011 (2011-12-11), XP055330654, Retrieved from the Internet: URL:http://web.archive.org/web/20111211123 148/http://www.plasmatreat.de/plasmabehand lung/plasmavorbehandlung/oberflaechenaktiv ierung_plasmaaktivierung.html [retrieved on 2016-12-20]

## Beschreibung

Die Erfindung betrifft ein Verbund-Bauteil aus Kunststoff für Dekorelemente im Innenraum von Kraftfahrzeugen, bestehend aus mindestens einem Träger aus galvanisierbarem Kunststoff und mindestens einem mit dem Träger unlösbar verbundenen Dekoreinleger aus galvanoresistentem Kunststoff.

Verbund-Bauteile der eingangs genannten Art sind beispielsweise aus der DE 195 16 540 A1 bekannt. Mit ihnen sind Kunststoffteile herstellbar, die bereichsweise metallisierte Oberflächen aufweisen und mit denen somit das Innenraumdesign von Kraftfahrzeugen beeinflusst werden kann. Bei dem bekannten Bauteil findet als galvanoresistentes Material unter anderem Polycarbonat (PC) Anwendung. Mit diesem waren bisher die Anforderungen der Automobilhersteller an die Materialeigenschaften für die Innenraumgestaltung von solchen Kunststoffbauteilen erfüllbar. Sie waren daher geeignet, einerseits als Dekorelemente, andererseits auch für Bauteile verwendet zu werden, die ein so genanntes Tag-Nacht-Design aufweisen, um eine Erkennbarkeit bestimmter Funktionselemente auch bei Dunkelheit zu ermöglichen.

In jüngster Zeit besteht auf Seiten der Automobilhersteller jedoch vermehrt ein weiteres Erfordernis, welches die Verbund-Bauteile zur Innraumgestaltung von Kraftfahrzeugen erfüllen sollen, nämlich eine Beständigkeit gegen Chemikalien und Hautkosmetika im Allgemeinen sowie dem so genannten "Sunlotion-Test" im Besonderen. Dabei werden die Bauteile mit einer Sonnenmilch vergleichbaren Lotion benetzt. Die so benetzten Bauteile werden im Anschluss mehrere Stunden erhöhten Temperaturen ausgesetzt. Nach dem Abkühlen wird die Lotion von den Bauteilen entfernt und begutachtet. Dabei hat sich herausgestellt, dass die metallisierten Oberflächen dem Sunlotion-Test problemlos widerstehen. Die aus Polycarbonat gefertigten weiteren Bestandteile der Verbund-Bauteile versagen jedoch bei diesem Test. Bestandteile aus Polycarbonat sind nicht in der Lage, die optischen Anforderungen der Automobilhersteller insbesondere an die Brillanz der Oberflächen zu erfüllen.

Es ist daher Aufgabe der vorliegenden Erfindung, ein Verbund-Bauteil aus Kunststoff für Dekorelemente im Innenraum von Kraftfahrzeugen zu schaffen, das einerseits aus einem Träger aus galvanisierbarem Kunststoff und andererseits aus einem Dekoreinleger aus galvanoresistentem Kunststoff besteht, der neben den übrigen Anforderungen der Automobilhersteller auch derjenigen des Sunlotion-Tests genügt. Gemäß der Erfindung wird diese Aufgabe durch die Merkmale des Anspruchs 1 gelöst.

Mit der Erfindung ist ein Verbund-Bauteil aus Kunststoff für Dekorelemente im Innenraum von Kraftfahrzeugen geschaffen, das neben den bisherigen Anforderungen der Automobilindustrie nach Galvanobeständigkeit der Dekorvariante, Haftung des Dekors auf das zu galvanisierende Material, Kratzbeständigkeit sowie einer hochglänzenden Oberfläche auch dem nunmehr zunehmend angewendeten Sunlotion-Test genügt. Es ist damit auch zukünftig die Möglichkeit geschaffen, Verbund-Bauteile aus Kunststoff für den Innenraum von Kraftfahrzeugen mit bereichsweise metallisierten Oberflächen bereitzustellen. Somit kann weiterhin auf die mehrteilige Ausbildung der Bauteile, bei denen ein galvanisiertes Kunststoffteil mit einem nicht galvanisiertem Kunststoffteil kraft- oder formschlüssig verbunden ist, verzichtet werden, sodass zusätzliche Montagearbeitsgänge nicht erforderlich sind. Die Gestaltung von Verbund-Bauteilen für den Außenbereich von Kraftfahrzeugen bleibt davon unberührt, da diese nicht dem Sunlotion-Test unterworfen werden, jedoch einen erhöhten UV-Schutz aufweisen müssen.

Bei Cyclo-Olefin-Copolymeren (COC) handelt es sich um technische Polymere. Sie sind amorph und daher transparent. Zudem weisen die Cyclo-Olefin-Copolymere (COC) eine hohe Steifigkeit, Festigkeit und Härte auf. Alternativ kann ein Polyamid 12 (PA12) als galvanoresistente Komponente eingesetzt werden.

Dabei handelt es um ein amorphes, unpolares Polyamid, welches eine geringe Dichte, hohe Verschleißfestigkeit und Zähigkeit aufweist
In Weiterbildung der Erfindung ist der galvanisierbare Kunststoff des Trägers mit Polyolefinen gemischt. Mit der Beimischung von Polyolefinen ist eine Verbesserung der Haftung zwischen dem galvanisierbaren und dem galvanoresistenten Kunststoff hervorgerufen.

Bevorzugt liegt der Anteil an Polyolefin im galvanisierbaren Kunststoff des Trägers zwischen 5 % und 30 %; äußerst bevorzugt beträgt der Anteil 10 %.

In anderer Weiterbildung der Erfindung ist der galvanoresistente Kunststoff des Dekoreinlegers mit Polyolefinen gemischt. Durch Beimengung des Polyolefinen ist auch die Haftung des galvanoresistenten Kunststoffs an dem galvanisierbaren Kunststoff des Trägers zusätzlich verbessert.

Vorteilhaft liegt der Anteil Polyolefin im galvanoresistenten Kunststoff des Dekoreinlegers zwischen 5 % und 40 %; bevorzugt beträgt der Anteil 20 %.

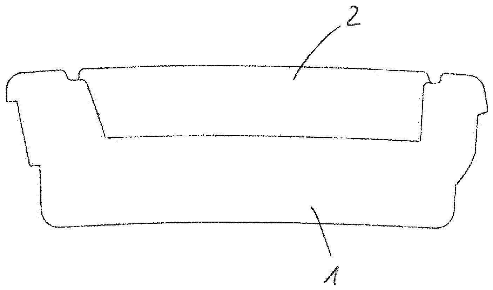

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Die einzige Figur der Zeichnung zeigt den Querschnitt durch ein erfindungsgemäßes Verbund-Bauteil in Form einer Dekorleiste für den Innenraum eines Kraftfahrzeugs.

Das als Ausführungsbeispiel gewählte Verbund-Bauteil aus Kunststoff ist für den Einsatz als Dekorelement im Innenraum von Kraftfahrzeugen vorgesehen. Beispielhaft besteht es aus einem Träger 1 aus galvanisierbarem Kunststoff. Mit dem Träger 1 ist ein Dekoreinleger 2 verbunden. Der Dekoreinleger 2 besteht aus galvanoresistentem Kunststoff. In Abwandlung des Ausführungsbeispiels können mit dem Träger 1 auch mehrere Dekoreinleger 2 verbunden sein. Die Verbindung zwischen dem Träger 1 und dem Dekoreinleger 2 erfolgt stoffschlüssig und ist somit nicht lösbar.

Bei dem galvanisierbaren Kunststoff des Trägers 1 handelt es sich um ein Acrylnitril-Butadien-Styrol-Copolymer (ABS), wobei der galvanisierbare Kunststoff des Trägers 1 mit Anteilen von Polycarbonat (PC) versehen ist.

Der galvanisierbare Kunststoff des Trägers 1 ist mit Polyolefinen gemischt, vorzugsweise mit Polypropylen (PP). Der Anteil der Polyolefine liegt zwischen 5 % und 30 %. Untersuchungen haben ergeben, dass die besten Materialeigenschaften erzielbar sind, wenn der Anteil an Polyolefinen im galvanisierbaren Kunststoff des Trägers 10 % beträgt.

Bei dem galvanoresistenten Kunststoff des Dekoreinlegers 2 handelt es sich um Cyclo-Olefin-Copolymer (COC). Im Ausführungsbeispiel ist auch der galvanoresistente Kunststoff des Dekoreinlegers 2 mit Polyolefinen gemischt. Erfindungsgemäß liegt der Anteil der Polyolefine im galvanoresistenten Kunststoff des Dekoreinlegers 2 zwischen 5 % und 40 %. Ein Anteil von 20 % Polyolefinen im galvanoresistenten Kunststoff ist hierbei erfindungsgemäß bevorzugt.

Die Herstellung des erfindungsgemäßen Verbund-Bauteils erfolgt im Spritzgießverfahren, sodass im Ausführungsbeispiel durch ein Zwei-Komponenten-Spritzgießverfahren das erfindungsgemäße Bauteil herstellbar ist. Durch die stoffschlüssige Verbindung des Trägers mit dem Dekoreinleger ist nach dem Spritzgießen das Verbund-Bauteil in seiner Grundform montagefertig erstellt. Im Anschluss erfolgt lediglich die Galvanisierung, wobei die Galvanisierung teilweise oder vollständig an dem Träger 1 erfolgen kann. In der Regel wird aus Kostengründen eine teilweise Galvanisierung erfolgen, sodass lediglich die jeweilige Ansichtsseite des Trägers 1 des Verbund-Bauteils eine metallisierte Oberfläche aufweist.

Aufgrund der im Ausführungsbeispiel galvanoresistenten Ausbildung des Dekoreinlegers 2 ist nach der Galvanisierung die Oberfläche des Dekoreinlegers 2 unverändert. Durch die Galvanoresistenz des Dekoreinlegers 2 ist eine Beschädigung während des Galvanisiervorgangs ausgeschlossen. Vielmehr ist es möglich, beispielsweise eine schwarze oder andersfarbige, hochglänzende Oberfläche auch nach dem Galvanikprozess bereitzustellen. Damit ist den sehr hohen optischen Anforderungen im Innenraum von Automobilen genüge getan. Gleichzeitig erfüllt das erfindungsgemäße Verbund-Bauteil auch alle übrigen Anforderungen in der Automobilindustrie. So ist eine zuverlässige Haftung der Galvanobeschichtung auf dem Träger 1 aufgrund des gewählten Kunststoffs gewährleistet. Gleichzeitig ist das Material kratzbeständig. Zudem ist die Herstellung einer hochglänzenden Oberfläche des nicht galvanobeschichteten Dekoreinlegers 2 möglich.

Erfindungswesentlich ist jedoch, dass das Verbund-Bauteil die neuerdings zum Einsatz kommenden Tests, insbesondere den Sunlotion-Test, ohne Beschädigung sowohl der Galvanoschicht als auch der Oberfläche des Dekoreinlegers besteht. Dies ist durch die erfindungsgemäße Verwendung von Cyclo-Olefin-Copolymer (COC) oder Polyamid 12 (PA12) als galvanoresistentem Kunststoff für den Dekoreinleger erzielt. Dabei ist zu beachten, dass Polyamid 12 (PA12) unter normalen Verarbeitungsbedingungen keine Haftung mit dem zu galvanisierenden Trägermaterial eingeht, so dass eine besondere Behandlung erforderlich ist. Hier hat sich die Behandlung des Trägermaterials mit einem Plasmastrahl als besonders geeignet herausgestellt. Dabei wird die Oberfläche des zu beschichtenden Bauteils, hier des Trägers 1, mit einem aktiven Gas plasmabehandelt, was zu einem Aufbrechen der oberflächennahen Bindungen im Kunststoff führt, um eine aktivierte, polare Oberfläche zu erhalten, wodurch die Haftung der Materialien ermöglicht wird.

Umfangreiche Untersuchungen haben gezeigt, dass Cyclo-Olefin-Copolymer (COC) und Polyamid 12 (PA12) den bisherigen Qualitätsanforderungen der Automobilhersteller genügt und eben auch den Sunlotion-Test besteht, bei dem die bisherigen Materialien versagen. Aufgrund der gewählten Materialkombination, insbesondere der Beimischung von Polyolefinen, insbesondere Polypropylen (PP) zum galvanisierbaren Kunststoff des Trägers 1 und/oder zum galvanoresistenten Kunststoff des Dekoreinlegers 2, ist zudem die Haftung der beiden verwendeten Materialien hervorragend, sodass auch hier die bisher bekannten Ergebnisse der im Stand der Technik verwendeten Materialkomponenten erzielbar ist.

Polypropylen (PP) ist dabei besonders geeignet, da es artverwandt zu dem Cyclo-Olefin-Copolymer (COC) ist, welches chemisch durch ein besonderes Polymerisationsverfahren katalysiert wurde und im eigentlichen Sinne chemisch ein Polypropylen(PP) ist.

Als "Haftvermittler" zwischen ABS und COC können auch andere Polyolefine eingesetzt werden, wie Polyethylen (PE) oder Polystyrol (PS). Durch Beimischen von Mineral zu der zu galvanisierenden Komponente können überdies die mechanischen Eigenschaften des ABS sowie des PP verbessert werden.

Von entscheidender Bedeutung ist die Haftung des galvanoresistenten Kunststoffs für den Dekoreinleger, da es bei nicht zuverlässiger Haftung zum Eindringen von Elektrolyten während des Galvanikprozesses kommen kann, die sich wiederum im fortlaufenden Prozess des Galvanisierens auswaschen und zu offenen Stellen in den zu galvanisierenden Bereichen führen. Mit dem erfindungsgemäß vorgeschlagenen Bauteil ist die Haftung gewährleistet und einem Aufbrechen erfolgreich entgegengewirkt.

## Patentansprüche

1. Verbund-Bauteil aus Kunststoff für Dekorelemente im Innenraum von Kraftfahrzeugen, bestehend aus mindestens einem Träger (1) aus galvanisierbarem Kunststoff und mindestens einem mit dem Träger (1) unlösbar verbundenen Dekoreinleger (2) aus galvanoresistentem Kunststoff, **dadurch gekennzeichnet, dass** der galvanisierbare Kunststoff des Trägers (1) ein Acrylnitril-Butadien-Styrol-Copolymer (ABS) ist und der Träger (1) im zu beschichtenden Bereich mit einem aktiven Gas plasmabehandelt ist, wobei lediglich eine bereichsweise Beschichtung erfolgt, und der galvanoresistente Kunststoff des Dekoreinlegers (2) ein Cyclo-Olefin-Copolymer (COC) oder ein Polyamid 12 (PA 12) ist, wobei der galvanisierbare Kunststoff des Trägers (1) ein Acrylnitril-Butadien-StyrolCopolymer (ABS) mit Anteilen von Polycarbonat (PC) ist.

2. Bauteil nach Anspruch 1, **dadurch gekennzeichnet, dass** der galvanisierbare Kunststoff des Trägers (1) mit Polyolefinen gemischt ist.

3. Bauteil nach Anspruch 2, **dadurch gekennzeichnet, dass** der Anteil Polyolefin im galvanisierbaren Kunststoff des Trägers (1) zwischen 5 % und 30 % liegt.

4. Bauteil nach Anspruch 2 oder 3, **dadurch gekennzeichnet, dass** der Anteil Polyolefin im galvanisierbaren Kunststoff des Trägers (1) 10 % beträgt.

5. Bauteil nach einem oder mehreren der vorgenannten Ansprüche, **dadurch gekennzeichnet, dass** der galvanoresistente Kunststoff des Dekoreinlegers (2) mit Polyolefin gemischt ist.

6. Bauteil nach Anspruch 5, **dadurch gekennzeichnet, dass** der Anteil Polyolefin im galvanoresistenten Kunststoff des Dekoreinlegers (2) zwischen 5 % und 40 % liegt.

7. Bauteil nach Anspruch 5 oder 6, **dadurch gekennzeichnet, dass** der Anteil Polyolefin im galvanoresistenten Kunststoff 20 % beträgt.

8. Bauteil nach einem oder mehreren der vorgenannten Ansprüche, **dadurch gekennzeichnet, dass** das Polyolefin ein Polypropylen (PP) ist.

## Claims

1. Composite component made of plastic for decorative elements in the interior of motor vehicles consisting of at least one support (1) made of galvanisable plastic and at least one decorative insert (2) made of galvanoresistant plastic which is undetachably connected to the support (1), **characterised in that** the galvanisable plastic of the support (1) is an acrylonitrile-butadiene-styrene copolymer (ABS) and the support (1) is plasma-treated with an active gas in the area to be coated, wherein only a partial coating is carried out, and the galvanorestistant plastic of the decorative insert (2) is a cyclo-olefin copolymer (COC) or a polyamide 12 (PA 12), wherein the galvanisable plastic of the support (1) is an acrylonitrile-butadiene-styrene copolymer (ABS) having portions of polycarbonate (PC).

2. Component according to claim 1, **characterised in that** the galvanisable plastic of the support (1) is mixed with polyolefins.

3. Component according to claim 2, **characterised in that** the proportion of polyolefin in the galvanisable plastic of the support (1) is between 5% and 30%.

4. Component according to claim 2 or 3, **characterised in that** the proportion of polyolefin in the galvanisable plastic of the support (1) is 10%.

5. Component according to one or more of the previous claims, **characterised in that** the galvanoresistant plastic of the decorative insert (2) is mixed with polyolefin.

6. Component according to claim 5, **characterised in that** the proportion of polyolefin in the galvanoresistant plastic of the decorative insert (2) is between 5% and 40%.

7. Component according to claim 5 or 6, **characterised in that** the proportion of polyolefin in the galvanoresistant plastic is 20%.

8. Component according to one or more of the previous claims, **characterised in that** the polyolefin is a polypropylene (PP).

## Revendications

1. Élément de construction composite en matière plastique pour éléments décoratifs en habitacle de véhicules, composé d'au moins un support (1) en matière plastique galvanisable et d'au moins un insert décoratif (2), en matière plastique galvanorésistante, solidarisé de manière permanente au support (1), **caractérisé en ce que** la matière plastique galvanisable du support (1) est un copolymère acrylnitrile-butadiène-styrène (ABS) et que le support (1) a reçu, dans la zone à revêtir, un traitement plasmatique avec un gaz actif, sachant que l'application n'a lieu que localement et que la matière plastique galvanorésistante de l'insert décoratif (2) est un copolymère cyclo-oléfine (COC) ou un polyamide 12 (PA 12), sachant que la matière plastique galvanisable du support (1) est un copolymère acrylnitrile-butadiène-styrène (ABS) contenant des parts de polycarbonate (PC).

2. Élément de construction selon la revendication 1, **caractérisé en ce que** la matière plastique galvanisable du support (1) est mélangée à des polyoléfines.

3. Élément de construction selon la revendication 2, **caractérisé en ce que** la part de polyoléfine dans la matière plastique galvanisable du support (1) est comprise entre 5 % et 30 %.

4. Élément de construction selon la revendication 2 ou 3, **caractérisé en ce que** la part de polyoléfine dans la matière plastique galvanisable du support (1) est de 10 %.

5. Élément de construction selon l'une ou plusieurs des revendications précédentes, **caractérisé en ce que** la matière plastique galvanorésistante de l'insert décoratif (2) est mélangée à de la polyoléfine.

6. Élément de construction selon la revendication 5, **caractérisé en ce que** la part de polyoléfine dans la matière plastique galvanorésistante de l'insert décoratif (2) est comprise entre 5 % et 40 %.

7. Élément de construction selon la revendication 5 ou 6, **caractérisé en ce que** la part de polyoléfine dans la matière plastique galvanorésistante est de 20 %.

8. Élément de construction selon l'une ou plusieurs des revendications précédentes, **caractérisé en ce que** la polyoléfine est un polypropylène (PP).
